# NEUE EUROPÄISCHE PATENTSCHRIFT

(11) **EP 1 477 763 B2**
(45) Veröffentlichungstag und Bekanntmachung des Hinweises auf die Entscheidung über den Einspruch: **30.10.2013**
(45) Hinweis auf die Patenterteilung: 23.08.2006
(21) Anmeldenummer: 03010806.2
(22) Anmeldetag: 14.05.2003
(51) Int. Cl.: F41G 3/16

(54) **Vorrichtung zur Befestigung einer Kamera an einem Beobachtungsfernrohr**
Apparatus for affixing a camera to an observation telescope
Dispositif de fixation d'un appareil photographique à un téléscope d'observation

(43) Veröffentlichungstag der Anmeldung: 17.11.2004
(73) Patentinhaber: SWAROVSKI OPTIK KG, 6067 Absam i. Tirol (AT)
(72) Erfinder: Pernstich, Ludwig Dipl.Ing, 6020 Rum bei Innsbruck (AT); Wiedermann, Helmut, 6130 Pill (AT)
(74) Vertreter: Kador & Partner

(56) Entgegenhaltungen:
- DE-A- 3 333 425
- US-A- 2 937 584
- US-A- 3 399 612

## Beschreibung

Die Erfindung bezieht sich auf eine Vorrichtung zur Befestigung eines Fotoapparates, eines Camcorders oder dergleichen Kamera an einem Beobachtungsfemrohr, wobei in der Aufnahmestellung die optische Achse des Kameraobjektives koaxial zur optischen Achse des Fernrohrokulars verläuft.

Beobachtungsfernrohre können als Objektive großer Brennweite und damit hoher Vergrößerung für Fotoapparate, Camcorder und dergleichen Kameras verwendet werden.

Da Beobachtungsfernrohre keinen Anschluß für eine Kamera besitzen wird eine Adapter zur Befestigung der Kamera am Fernrohr verwendet. Der Adapter kann als eine an dem Stativgewinde der Kamera befestigte auf das Okular des Beobachtungsfernrohres steckbare gabelförmige Klemmvorrichtung ausgebildet sein. Wenn das Okular des Fernrohrs eine abschraubbare Augenmuschel besitzt, kann der Adapter ein Gewinde aufweisen, das auf das Befestigungsgewinde der Augenmuschel geschraubt wird, und ein zweites Gewinde, mit dem der Adapter am Filtergewinde des Objektivs der Kamera befestigt wird.

Die am Okular befestigbare Klemmvorrichtung erfordert jedesmal, wenn die Kamera von dem Beobachtungsfernrohr abgenommen worden ist, eine erneute zeitraubende Justierung. Auch kann die Klemmvorrichtung bei Zoomokularen meist nur am Zoomring befestigt werden, so daß beim Fotografieren kein Zoomen mehr möglich ist. Zudem ist die Befestigung der Klemmvorrichtung am Okular recht instabil und damit recht empfindlich gegenüber Erschütterungen, wodurch die Bildqualität beeinträchtigt werden kann. Wegen der instabilen Befestigung am Beobachtungsfemrohr muß darüber hinaus jedesmal die Kamera abgenommen werden, wenn mit dem Beobachtungsfernrohr der Beobachtungsstandort gewechselt wird.

Bei einer Befestigung der Kamera an einem Gewinde der Augenmuschel muß die Kamera zum Beobachten jedesmal ab und die Augenmuschel jedesmal wieder aufgeschraubt werden. Auch ist keine Justierung der Kamera zum Beobachtungsfernrohr möglich und daher für jede Kamera ein eigener Adapter erforderlich.

Bei der Befestigung des Adapters am Filtergewinde der Kamera besteht die Gefahr, daß die Kamera beschädigt wird, weil das Filtergewinde nicht dazu ausgelegt ist, das gesamte Gewicht der Kamera zu tragen. Wegen dieser instabilen Befestigung muß die Kamera jedesmal abgenommen werden, wenn man mit dem Beobachtungsfernrohr den Beobachtungsstandort wechselt. Bei Zoom-Objektiven ist eine Befestigung nicht möglich, weil sich beim Zoomen das Objektiv bewegt.

Viele Kameras besitzen zudem kein Filtergewinde. Auch ist für jede Kamera ein eigener Adapter nötig. So kann an Stelle des Filtergewindes ein eigenes Gewinde zur Befestigung des Adapters am Kameragehäuse vorgesehen sein. Dieses Gewinde ist jedoch nur bei wenigen Kameras vorhanden.

Aus DE-A-33 33 425 ist eine Vorrichtung zur Befestigung einer Kamera an dem Zielfernrohr einer Waffe bekannt, die dazu eine Halterung aufweist, an der die Kamera mit einem Anschlußstück um ein Kugelgelenk verschwenkbar befestigt ist. Das Anschlußstück ist mit einem halbdurchlässigen Spiegel versehen, so daß das aus dem Zielfernrohrokular austretende Lichtbündel in ein Teilbündel aufgespalten wird, das in das Auge des Beobachters fällt, während das andere Teilbündel senkrecht zur Kamera abgelenkt wird.

Aufgabe der Erfindung ist es eine Vorrichtung zur Befestigung einer Kamera an einem Beobachtungsfernrohr bereit zu stellen, die eine rasche und unkomplizierte Montage und Demontage der Kamera erlaubt, für Kameras unterschiedlicher Baugrößen verwendbar ist und eine einfache und genaue Justierung des optischen Achse der Kamera zur optischen Achse des Okulars des Beobachtungsfernrohrs sowie einen einfachen Wechsel zwischen Beobachten durch das Beobachtungsfernrohr und Fotografieren bzw. Filmen mit der Kamera ermöglicht.

Dies wird erfindungsgemäß mit der im Anspruch 1 gekennzeichneten Vorrichtung erreicht. In den Unteransprüchen sind vorteilhafte Ausgestaltungen der erfindungsgemäßen Vorrichtung wiedergegeben.

Bei der erfindungsgemäßen Vorrichtung ist die Kamera mit einem Schwenkarm derart am Beobachtungsfernrohr angelenkt, daß sie zwischen einer Aufnahmestellung zum Fotografieren oder Filmen und einer Beobachtungsstellung, in der das Ziel durch das Fernrohrokular beobachtbar ist, verschwenkbar ist. Dabei verläuft die optische Achse des Kameraobjektivs in der Aufnahmestellung in Richtung der optischen Achse des Femrohrokulars. Das heißt, in der Aufnahmestellung sind die optische Achse des Kameraobjektives und die optische Achse des Fernrohrokulars koaxial zu einander angeordnet. Dem gegenüber ist die Kamera in der Beobachtungsstellung aus der Achse des Fernrohrokulars heraus geschwenkt, wodurch die optischen Achsen des Kameraobjektivs und des Fernrohrokulars einen Winkel bilden.

Mit der erfindungsgemäßen Vorrichtung ist ein rascher Wechsel zwischen Beobachten einerseits und Fotografieren oder Filmen andererseits ohne Einfluß auf die Justierung zwischen Kamera und Beobachtungsfernrohr möglich. Die erfindungsgemäße Vorrichtung ist für Kameras unterschiedlicher Abmessungen geeignet. Die Kamera kann ein Fotoapparat, eine Digitalkamera, ein Camcorder oder dergleichen sein.

Der Schwenkarm ist vorzugsweise am Okular oder Grundkörper des Beobachtungsfernrohrs angelenkt. Damit wird bei Zoom-Okularen die Vergrößerungseinstellung nicht beeinträchtigt, da nur ein schmaler Bereich des Okulars benötigt wird bzw. die Befestigung auch nur am Beobachtungsfernrohr erfolgen kann.

Der Schwenkarm ist vorzugsweise um eine horizontale Achse verschwenkbar am Beobachtungsfernrohr gelagert. Beobachtungsfernrohre werden auf Stativköpfe montiert. Diese erlauben das Schwenken um die horizontale und vertikale Achse. Optimale Gängigkeit dieser Bewegung wird dann erreicht, wenn der Schwerpunkt des Beobachtungsfernrohres möglichst in der Nähe der Schwenkachse des Stativkopfes liegt. Durch die Verschwenkbarkeit des Schwenkarmes um eine horizontale Achse kann die Kamera nach oben über das Beobachtungsfernrohr geschwenkt werden. Damit ist der Unterschied zwischen dem Schwerpunkt des Beobachtungsfernrohres ohne Kamera und dem Schwerpunkt des Beobachtungsfernrohres mit in die Beobachtungsstellung geschwenkter Kamera relativ gering.

Der Schwenkarm ist vorzugsweise an einem Ring angelenkt, der das Okular oder den Grundkörper des Beobachtungsfemrohres fest umfaßt. Zum Anderen ist die Kamera an dem Schwenkarm vorzugsweise mit einer in das Stativgewinde der Kamera schraubbaren Schraube befestigt. Dadurch ist eine einfache und stabile Montage der Kamera am Beobachtungsfernrohr gewährleistet. Durch die stabile Bauweise werden Vibrationen vermieden und damit eine gleichbleibende optische Qualität hergestellt. Zudem kann durch die stabile Bauweise bei Standortwechsel die Kamera am Beobachtungsfernrohr verbleiben.

Der Ring, an dem der Schwenkarm angelenkt ist, ist vorzugsweise lösbar am Okular oder Grundkörper des Beobachtungsfernrohrs befestigt. Dazu ist er vorzugsweise als Klemmring ausgebildet. Der Klemmring kann mit einem Klemmhebel, Klemmschraube oder der gleichen Klemmeinrichtung am Okular bzw. Grundkörper befestigt sein. Der Schwenkarm kann einen Fortsatz aufweisen, der sich in Aufnahmestellung an dem Ring bzw. Klemmring abstützt, der an dem Okular oder Grundkörper des Beobachtungsfernrohres befestigt ist. Dadurch wird eine zusätzliche Stabilität erreicht. Zu diesem Zweck kann der Schwenkarm auch als Bügel ausgebildet sein, der das Okular und/oder den Grundkörper des Beobachtungsfernrohres umgreift. Zudem kann eine Rastung und/oder Klemmung des Schwenkarmes in den beiden Endstellungen, also der Aufnahmestellung und der Beobachtungsstellung zur Erleichterung des gemeinsamen Transportes des Beobachtungsfernrohres mit montierter Kamera vorgesehen sein.

Zur Justierung der optischen Achse des Kameraobjektivs auf die optische Achse des Fernrohrokulars ist die Kamera an dem Schwenkarm vorzugsweise um drei senkrecht zueinander angeordnete Achsen verschiebbar gelagert. Zur verschiebbaren Lagerung der Kamera um die drei Achsen kann ein an der Kamera befestigbarer quer zur optischen Achse des Kameraobjektivs verschiebbarer erster Schlitten, ein parallel zur optischen Achse des Kameraobjektivs verschiebbarer zweiter Schlitten, auf dem der erste Schlitten verschiebbar gelagert ist, und ein senkrecht zum ersten Schlitten am Schwenkarm verschiebbarer dritter Schlitten, auf dem der zweite Schlitten verschiebbar gelagert ist, vorgesehen sein.

Damit ist eine einfache Justierung der optischen Achsen zueinander gewährleistet, da Justierbewegungen in alle Richtungen unabhängig voneinander durchgeführt werden können. Da die einmal durchgeführte Justierung erhalten bleibt, ist eine gleichbleibende Qualität der Fotos gewährleistet. Zur Festlegung der mit den Schlitten einmal eingestellten Kameraposition sind vorzugsweise fixierbare Anschläge vorgesehen. Der erste Schlitten kann dabei mit der in das Kamerastativgewinde schraubbaren Schraube an der Kamera befestigt sein. Der erste Schlitten kann mit einer Längsführung, z. B. Schwalbenschwanzführung, an dem zweiten Schlitten gelagert sein. Auch kann eine Schwalbenschwanzführung zur Lagerung des dritten Schlittens an dem Schwenkarm vorgesehen sein.

Zur Feinjustierung der optischen Achse der Kamera auf die optische Achse des Fernrohrokulars kann eine Stellschraube vorgesehen sein, mit der sich der Schwenkarm im Abstand von dessen horizontaler Schwenkachse auf dem Ring bzw. Klemmring abstützt.

Auch ist es möglich, in den Ring, an dem der Schwenkarm angelenlst ist, die Optik zu integrieren, um eine optimale Abstimmung zwischen Beobachtungsfernrohr und Kamera zu erreichen.

Nachstehend ist eine Ausführungsform der erfindungsgemäßen Vorrichtung an Hand der Zeichnungen beispielhaft näher erläutert. Darin zeigen jeweils perspektivisch
- Fig. 1: ein Beobachtungsfernrohr mit daran befestigter Kamera in Beobachtungsstellung;
- Fig. 2: einen Teil des Beobachtungsfernrohres mit Kamera in der Aufnahmestellung;

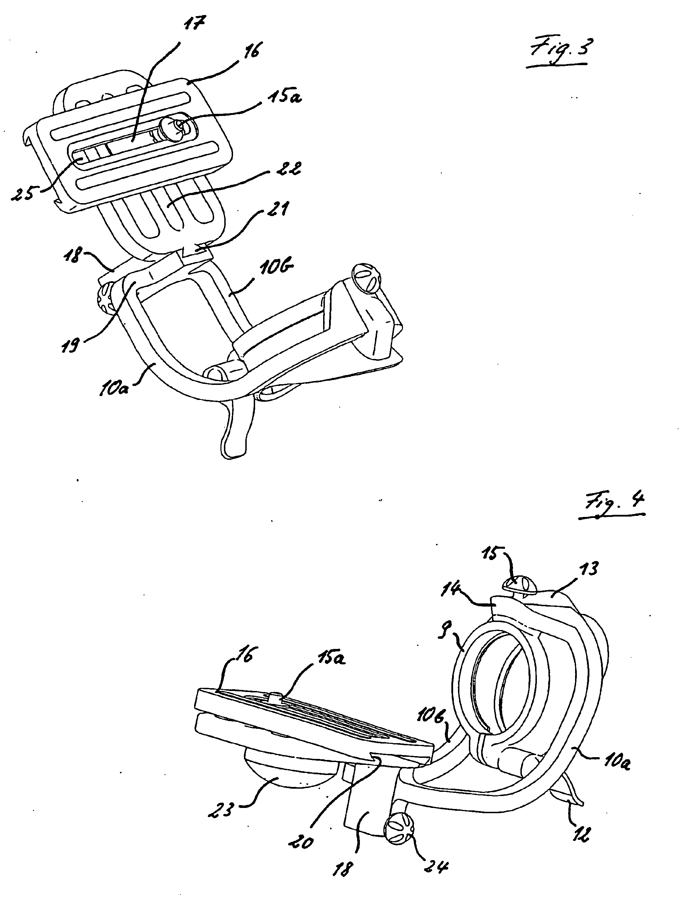

- Fig. 3 und 4: die Befestigungsvorrichtung von oben bzw. von der Seite; und

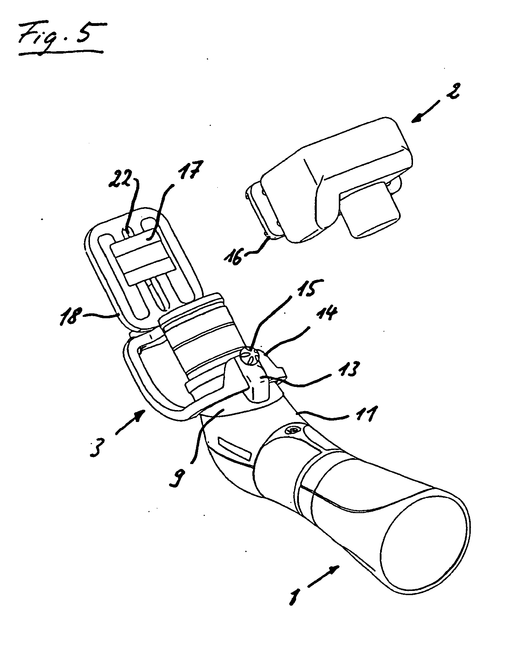

- Fig. 5: einen Teil des Beobachtungsfernrohrs mit daran befestigter Befestigungsvorrichtung, wobei der erste Schlitten an der abgenommenen Kamera befestigt ist.

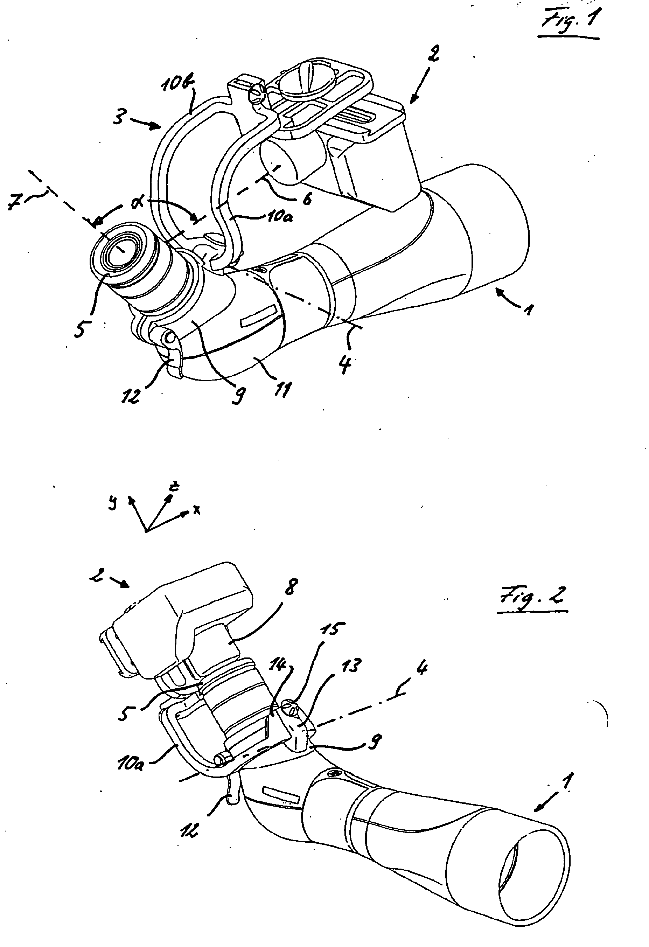

Gemäß Figur 1 und 2 ist an einem Beobachtungsfernrohr 1 ein Fotoapparat 2 mit einem Schwenkarm 3 befestigt. Der Schwenkarm 3 ist dazu an dem Beobachtungsfernrohr 1 um eine Achse 4 am Beobachtungsfernrohr 1 verschwenkbar gelagert, die horizontal und quer zum Beobachtungsfernrohr 1 verläuft. Damit kann die Kamera 2 aus der Beobachtungsstellung gemäß Figur 1, in der das Okular 5 des Beobachtungsfernrohres 1 zum Beobachten des Zieles freigegeben ist, in die Aufnahmestellung gemäß Figur 2 verschwenkt werden, in der mit der Kamera 2 fotografiert werden kann.

Während in der Aufnahmestellung gemäß Figur 2 die optischen Achsen 6 und 7 des Objektivs 8 der Kamera 2 und des Okulars 5 in der selben Richtung verlaufen, also koaxial angeordnet sind, bilden sie in der Beobachtungsstellung gemäß Figur 1 einen Winkel α.

Der Schwenkarm 3 ist an einem Klemmring 9 angelenkt, der am Grundkörper 11 des Beobachtungsfernrohres 1 befestigt ist, und zwar unmittelbar neben dem Okular 5. Der Klemmring 9 weist einen Klemmhebel 12 auf, um ihn am Grundkörper 11 festzuspannen.

Der Schwenkarm 3 ist als Bügel ausgebildet, der den Klemmring 9 in der Aufnahmestellung (Figur 2) oben und an den beiden Seiten mit zwei Armen 10a, 10b umgreift. Die Schwenkachse 4 ist an einem Vorsprung 13 oben an dem Klemmring 9 vorgesehen. Der bügelförmige Schwenkarm 3 weist einen sich von der Schwenkachse 4 in Richtung der Kamera 2 erstreckenden Fortsatz 14 auf, der von einer Stellschraube 15 durchsetzt wird, die sich auf dem Ring 9 abstützt. Damit ist in der Aufnahmestellung gemäß Figur 2 eine Feineinstellung der optischen Achse 6 des Kameraobjektives 8 zu der optischen Achse 7 des Fernrohrokulars 5 möglich.

Zur Justierung der optischen Achse 6 des Kameraobjektivs 8 auf die optische Achse 7 des Fernrohrokulars 5 ist die Kamera 2 an dem Schwenkarm 3 um drei senkrecht zueinander angeordnete Achsen x, y, z gelagert.

Dazu ist ein erster Schlitten 16 vorgesehen, an dem die Kamera 2 mit einer Schraube 15 befestigt ist, die in das Stativgewinde der Kamera 2 eingreift. Der erste Schlitten 16 ist in x-Richtung, also in der Aufnahmestellung quer zur optischen Achse 6 des Kameraobjektivs 8 auf einem zweiten Schlitten 17 gelagert. Der zweite Schlitten 17 ist in y-Richtung, also in der Aufnahmestellung in Richtung der optischen Achse 6 des Kameraobjektivs 8 auf einem dritten Schlitten 18 verschiebbar gelagert, welcher in z-Richtung am Schwenkarm 3 verschiebbar gelagert ist, und zwar dort, wo die beiden Arme 10a, 10b durch einen Steg 19 verbunden sind, der unter dem Fernrohrokular 5 verläuft.

Zur verschiebbaren Lagerung des ersten Schlitten 16 am zweiten Schlitten 17 und des dritten Schlitten 18 an dem Schwenkarm 3 bzw. Steg 19 ist jeweils eine Schwalbenschwanzführung 20 bzw. 21 vorgesehen. Weiterhin weist der dritte Schlitten 18 einen Führungsschlitz 22 auf, um den zweiten Schlitten 17 in der Aufnahmestellung parallel zu der optischen Achse des Kameraobjektivs 8 verschieben zu können.

Zur Fixierung des zweiten Schlitten 17 an den dritten Schlitten 18 ist ein Klemmknopf 23 vorgesehen, und zur Fixierung des dritten Schlitten 18 an dem Schwenkarm 3 ein Klemmknopf 24.

Ferner weist der erste Schlitten 16 einen Längsschlitz 25 auf, durch den die Befestigungsschraube 15a, um die optische Achse 7 des Kameraobjektivs 8 in Längsrichtung des ersten Schlittens 16 zu positionieren.

## Patentansprüche

1. Vorrichtung zur Befestigung einer Kamera (2) w. z.B. eines Fotoapparates, eines Camcorders oder dergleichen, an einem Beobachtungsfernrohr (1), wobei in der Aufnahmestellung die optische Achse (6) des Kameraobjektivs (8) in Richtung der optischen Achse (7) des Fernrohrokulars (5) verfäuft, die Kamera (2) zum Verschwenken zwischen der Aufnahmestellung (Figur 2) und der Beobachtungsstellung (Figur 1), in der das Ziel durch das Fernrohrokular (5) beobachtbar ist, an einem am Beobachtungsfernrohr (1) angelenkten Schwenkarm (3) derart verschwenkbar befestigt ist, dass die optischen Achsen (6, 7) des Kameraobjektives (8) und des Fernrohrokulars (5) in der Beobachtungsstellung (Figur 1) einen Winkel (α) bilden **dadurch gekennzeichnet, dass** der Schwenkarm (3) als Bügel ausgebildet ist, der das Okular (5) oder den Grundkörper (14) des Beobachtungsfernrohres (1) mit den zwei Armen (10a, 10b) umgreift.

2. Vorrichtung nach Anspruch 1, **dadurch gekennzeichnet, daß** der Schwenkarm (3) am Okular (5) oder Grundkörper (11) des Beobachtungsfernrohres (1) angelenkt ist.

3. Vorrichtung nach Anspruch 1 oder 2, **dadurch gekennzeichnet, daß** der Schwenkarm (3) um eine horizontale Achse (4) verschwenkbar am Beobachtungsfernrohr (1) gelagert ist.

4. Vorrichtung nach einem der vorstehenden Ansprüche, **dadurch gekennzeichnet, daß** der Schwenkarm (3) an einem am Okular (5) oder Grundkörper (11) befestigbaren Ring angelenkt ist.

5. Vorrichtung nach Anspruch 4, **dadurch gekennzeichnet, daß** der Ring als Klemmring (9) ausgebildet ist.

6. Vorrichtung nach Anspruch 5, **dadurch gekennzeichnet, daß** der Klemmring (9) mit einem Klemmhebel (12) oder dergleichen Klemmeinrichtung befestigbar ist.

7. Vorrichtung nach einem der Ansprüche 4 bis 6, **dadurch gekennzeichnet, daß** der Schwenkarm (3) einen Fortsatz (14) aufweist, der sich in der Aufnahmestellung (Figur 2) am Ring bzw. Klemmring (9) abstützt.

8. Vorrichtung nach Anspruch 7, **dadurch gekennzeichnet, daß** an dem Fortsatz (14) eine Stellschraube (15) zur Feineinstellung der optischen Achse (6) des Kameraobjektivs (8) auf die optische Achse (7) des Fernrohrokulars (5) vorgesehen ist.

9. Vorrichtung nach einem der vorstehenden Ansprüchen, **dadurch gekennzeichnet, daß** die Kamera (2) mit einer in das Stativgewinde der Kamera (2) schraubbaren Schraube (15a) am Schwenkarm (3) befestigbar ist.

10. Vorrichtung nach einem der vorstehenden Ansprüche, **dadurch gekennzeichnet, daß** die Kamera (2) zur Justierung der optischen Achse (6) des Kameraobjektivs (8) auf die optische Achse (7) des Fernrohrokulars (5) an dem Schwenkarm (3) um drei senkrecht zueinander angeordnete Achsen (x, y, z) gelagert ist.

11. Vorrichtung nach Anspruch 10, **dadurch gekennzeichnet, daß** zur verschiebbaren Lagerung der Kamera (2) um die drei Achsen (x, y, z) ein an der Kamera (2) befestigbarer quer zur optischen Achse (6) des Kameraobjektivs (8) verschiebbarer erster Schlitten (16), ein parallel zur optischen Achse (6) des Kameraobjektivs (8) verschiebbarer zweiter Schlitten (17), auf dem der erste Schlitten (16) verschiebbar gelagert ist, und ein senkrecht zum ersten Schlitten (16) am Schwenkarm (3) verschiebbar gelagerter dritter Schlitten (18), auf dem der zweite Schlitten (17) verschiebbar gelagert ist, vorgesehen sind.

12. Vorrichtung nach Anspruch 9 und 11, **dadurch gekennzeichnet, das** der erste Schlitten (16) mit der in das Kamerastativgewinde schraubbaren Schraube (15) an der Kamera (2) befestigbar ist.

13. Vorrichtung nach Anspruch 11 oder 12, **dadurch gekennzeichnet, daß** der erste Schlitten (16) und/oder der dritte Schlitten (18) mit einer Schwalbenschwanzführung (20, 21) am zweiten Schlitten (17) bzw. am Schenkarm (3) gelagert sind.

14. Vorrichtung nach einem der Ansprüche 11 bis 13, **dadurch gekennzeichnet, daß** der dritte Schlitten (18) einen Führungsschlitz (22) für den parallel zu der optischen Achse (6) des Kameraobjektivs (8) verschiebbaren zweiten Schlitten (17) aufweist.

15. Vorrichtung nach einem der Ansprüche 11 bis 14, **dadurch gekennzeichnet, daß** zur Fixierung des zweiten Schlittens (17) am dritten Schlittens (18) und/oder zur Fixierung des dritten Schlittens (18) am Schwenkarm (3) ein Klemmknopf (23, 24) oder dergleichen Klemmenrichtung vorgesehen ist.

16. Vorrichtung nach Anspruch 12, **dadurch gekennzeichnet, daß** der erste Schlitten (16) einen Längsschlitz (25) aufweist, durch den die Befestigungsschraube (15) zur Positionierung der optischen Achse (6) des Kameraobjektivs (8) in Längsrichtung des ersten Schlittens (16) ragt.

## Claims

1. An apparatus for fastening a camera (2), such as a photographic camera, a camcorder or the like, to an observation telescope (1) whereby the optical axis (6) of the camera objective (8) extends in the direction of the optical axis (7) of the telescope eyepiece (5) in the shooting position, the camera (2) is fastened to a swivel arm (3) linked to the observation telescope (1) so as to swivel between the shooting position (Figure 2) and the observation position (Figure 1) in which the target is observable through the telescope eyepiece (5), in such a way that the optical axes (6, 7) of the camera objective (8) and the telescope eyepiece (5) form an angle (α) in the observation position (Figure 1), **characterized in that** the swivel (3) is formed as a stirrup which encompasses the eyepiece (5) or the base member (14) of the observation telescope (1) with the two arms (10a, 10b).

2. An apparatus according to claim 1, **characterized in that** the swivel arm (3) is linked to the eyepiece (5) or base member (11) of the observation telescope (1).

3. An apparatus according to claim 1 or 2, **characterized in that** the swivel arm (3) is mounted on the observation telescope (1) so as to swivel around a horizontal axis (4).

4. An apparatus according to any of the above claims, **characterized in that** the swivel arm (3) is linked to a ring to be fastened to the eyepiece (5) or base member (11).

5. An apparatus according to claim 4, **characterized in that** the ring is formed as a clamping ring (9).

6. An apparatus according to claim 5, **characterized in that** the clamping ring (9) is to be fastened with a clamping lever (12) or similar clamping device.

7. An apparatus according to any of claims 4 to 6, **characterized in that** the swivel arm (3) has an extension (14) which is supported on the ring or clamping ring (9) in the shooting position (Figure 2).

8. An apparatus according to claim 7, **characterized in that** a setscrew (15) is provided on the extension (14) for fine adjustment of the optical axis (6) of the camera objective (8) to the optical axis (7) of the telescope eyepiece (5).

9. An apparatus according to any of the above claims, **characterized in that** the camera (2) is to be fastened to the swivel arm (3) with a screw (15a) to be screwed into the tripod thread of the camera (2).

10. An apparatus according to any of the above claims, **characterized in that** the camera (2) is mounted on the swivel arm (3) around three axes (x, y, z) disposed perpendicular to each other for adjustment of the optical axis (6) of the camera objective (8) to the optical axis (7) of the telescope eyepiece (5).

11. An apparatus according to claim 10, **characterized in that** a first slide (16) to be fastened to the camera (2) and displaceable at right angles to the optical axis (6) of the camera objective (8), a second slide (17) displaceable parallel to the optical axis (6) of the camera objective (8) and having the first slide (16) mounted displaceably thereon, and a third slide (18) mounted displaceably perpendicular to the first slide (16) on the swivel arm (3) and having the second slide (17) mounted displaceably thereon are provided for displaceable mounting of the camera (2) around the three axes (x, y, z).

12. An apparatus according to claims 9 and 11, **characterized in that** the first slide (16) is to be fastened to the camera (2) with the screw (15) to be screwed into the camera tripod thread.

13. An apparatus according to claim 11 or 12, **characterized in that** the first slide (16) and/or the third slide (18) is mounted on the second slide (17) or the swivel arm (3) with a dovetail way (20, 21).

14. An apparatus according to any of claims 11 to 13, **characterized in that** the third slide (18) has a guide slot (22) for the second slide (17) displaceable parallel to the optical axis (6) of the camera objective (8).

15. An apparatus according to any of claims 11 to 14, **characterized in that** a clamping knob (23, 24) or similar clamping device is provided for fixing the second slide (17) to the third slide (18) and/or for fixing the third slide (18) to the swivel arm (3).

16. An apparatus according to claim 12, **characterized in that** the first slide (16) has a longitudinal slot (25) through which the fastening screw (15) protrudes for positioning the optical axis (6) of the camera objective (8) in the longitudinal direction of the first slide (16).

## Revendications

1. Dispositif de fixation d'une caméra (2), tel que par ex. un appareil photographique, un caméscope ou similaire sur un télescope d'observation (1), l'axe optique (6) de l'objectif (8) de l'appareil photographique, dans la position de prise de vues, s'étendant en direction de l'axe optique (7) de l'oculaire (5) du télescope, l'appareil photographique (2), pour pivotement entre la position de prise de vues (Figure 2) et la position d'observation (Figure 1) dans laquelle la cible est observable à travers l'oculaire (5) du télescope, étant monté à pivotement sur un bras pivotant (3) articulé sur le télescope d'observation (1), de telle façon que les axes optiques (6, 7) de l'objectif (8) de l'appareil photographique et de l'oculaire (5) du télescope dans la position d'observation (Figure 1) forment un angle (a), **caractérisé en ce que** le bras pivotant (3) est réalise comme un étrier qui entoure des deux bras (10a, 10b) l'oculaire (5) ou le corps de base (11) du télescope d'observation (1).

2. Dispositif selon la revendication 1 ou 2, **caractérisé en ce que** le bras pivotant (3) est articulé sur l'oculaire (5) ou le corps de base (11) du télescope d'observation (1).

3. Dispositif selon la revendication 1, **caractérisé en ce que** le bras pivotant (3) est logé à pivotement autour d'un axe horizontal (4) sur le télescope d'observation (1).

4. Dispositif selon l'une des revendications précédentes, **caractérisé en ce que** le bras pivotant (3) est articulé sur une bague apte à être fixée sur l'oculaire (5) ou le corps de base (11).

5. Dispositif selon la revendication 4, **caractérisé en ce que** la bague est réalisée en tant que bague de serrage (9).

6. Dispositif selon la revendication 5, **caractérisé en ce que** la bague de serrage (9) est apte à être fixée au moyen d'un levier de serrage (12) ou dispositif de serrage similaire.

7. Dispositif selon l'une des revendications 4 à 6, **caractérisé en ce que** le bras pivotant (3) présente un prolongement (14) qui, dans la position de prise de vues (Figure 2), est en appui sur la bague et/ou la bague de serrage (9).

8. Dispositif selon la revendication 7, **caractérisé en ce qu'**est prévue sur le prolongement (14) une vis de réglage (15) pour le réglage fin de l'axe optique (6) de l'objectif (8) de l'appareil photographique sur l'axe optique (7) de l'oculaire (5) du télescope.

9. Dispositif selon l'une des revendications précédentes, **caractérisé en ce que** l'appareil photographique (2) est apte à être fixé sur le bras pivotant (3) au
moyen d'une vis (15a) apte à être vissée dans le filetage du pied de l'appareil photographique (2).

10. Dispositif selon l'une des revendications précédentes, **caractérisé en ce que**, pour le réglage de l'axe optique (6) de l'objectif (8) de l'appareil photographique sur l'axe optique (7) de l'oculaire (5) du télescope, l'appareil photographique (2) est logé sur le bras pivotant (3) autour de trois axes (x, y, z) situés perpendiculairement entre eux.

11. Dispositif selon la revendication 10, **caractérisé en ce que** sont prévus, pour le logement coulissable de l'appareil photographique (2) autour des trois axes (x, y, z), un premier coulisseau (16) apte à être fixe sur l'appareil photographique (2), déplaçable transversalement par rapport à l'axe optique (6) de l'objectif (8) de l'appareil photographique, un deuxième coulisseau (17) déplaçable parallèlement à l'axe optique (6) de l'objectif (8) de l'appareil photographique, sur lequel le premier coulisseau (16) est logé coulissable, et un troisième coulisseau (18) logé coulissable sur le bras pivotant, perpendiculairement au premier coulisseau (16), sur lequel est logé coulissable le deuxième coulisseau (17).

12. Dispositif selon la revendication 9 ou 11, **caractérisé en ce que** le premier coulisseau (16) est apte à être fixé sur l'appareil photographique (2) au moyen de la vis (15) apte à être vissée dans le filetage du pied de l'appareil photographique.

13. Dispositif selon la revendication 11 ou 12, **caractérisé en ce que** le premier coulisseau (16) et/ou le troisième coulisseau (18) sont logés au moyen d'un guidage en queue d'aronde (20, 21) sur le deuxième coulisseau (17) et/ou sur le bras pivotant (3).

14. Dispositif selon l'une des revendications 11 à 13, **caractérisé en ce que** le troisième coulisseau (18) présente une fente de guidage (22) du deuxième coulisseau (17) coulissable parallèlement à l'axe optique (6) de l'objectif (8) de l'appareil photographique (2).

15. Dispositif selon l'une des revendications 11 à 14, **caractérisé en ce que**, pour fixer le deuxième coulisseau (17) sur le troisième coulisseau (18) et/ou pour fixer le troisième coulisseau (18) sur le bras pivotant (3), est prévu un bouton de serrage (23, 24) ou dispositif de serrage similaire.

16. Dispositif selon la revendication 12, **caractérisé en ce que** le premier coulisseau (16) présente une fente longitudinale (25) à travers laquelle fait saillie la vis de fixation 15 pour le positionnement de l'axe optique (6) de l'objectif (8) de l'appareil photographique dans le sens longitudinal du premier coulisseau (16).
